# EUROPEAN PATENT APPLICATION

(11) **EP 2 991 341 A1**
(43) Date of publication of application: **02.03.2016**
(21) Application number: 15182359.8
(22) Date of filing: 25.08.2015
(51) Int. Cl.: H04N 5/76, G11B 27/034, H04N 21/262

(54) **VIDEO PLAYBACK METHOD, MEDIA DEVICE, PLAYBACK DEVICE, AND MULTIMEDIA SYSTEM**

(30) Priority: 26.08.2014 CN 201410424543
(71) Applicant: Huawei Technologies Co., Ltd., Longgang District Shenzhen, Guangdong 518129 (CN)
(72) Inventor: ZHANG, Yi, 518129 Shenzhen Guangdong (CN)
(74) Representative: Maiwald Patentanwalts GmbH

(57) **Abstract**

Embodiments of the present invention provide a video playback method, a media device, a playback device, and a multimedia system, which relate to the field of communications, and are used to implement continuous playback of video segments in any format. The method includes: searching at least one media server to obtain video segments of a to-be-played video; acquiring playback information, address information, and a decoding parameter of each video segment; determining, according to the playback information of the video segments, usable video segments for continuous playback of the to-be-played video and an order of the usable video segments, and generating, according to the order, a playlist including the address information and the decoding parameter of each usable video segment; and sending the playlist to a playback device, so that the playback device finds a usable video segment according to the order and according to the address information, and decodes the usable video segment by using a decoding parameter and plays the usable video segment.

## Description

### TECHNICAL FIELD

The present invention relates to the field of communications, and in particular, to a video playback method, a media device, a playback device, and a multimedia system.

### BACKGROUND

Currently, a large quantity of video media file segments are spread on the Internet, and a video portal website and a client need to integrate video media file segments before gapless playback of a video file can be implemented.

In an existing HLS (HTTP Live Streaming) technology, a collected video resource can be segmented into video segments in a TS (Transport Stream) format, and the video segments are distributed onto a media server in a network. A playback end device formed of a media gateway and a set-top box is used as an example. When a video is played, the media gateway acquires, from a media server, video segments in a TS format of the video, combines the video segments according to different code streams, and writes address information of the video segments into a file of an M3U8 list. After receiving the M3U8 list, the set-top box can acquire actual addresses of the video segments by parsing the M3U8 list, and then read the video segments according to the actual addresses of the video segments, so as to play the video in a gapless manner.

It can be seen that, it is specified in the existing HLS technology that a video segment is required to be in a TS format, and an encoding format of the video segment is required to be H.264 and AAC formats. The HLS technology cannot be used for video segments in other formats, and continuous playback of video segments is greatly limited.

### SUMMARY

Embodiments of the present invention provide a video playback method, a media device, a playback device, and a multimedia system, which can play a video formed of video segments in various formats.

To achieve the foregoing objective, the embodiments of the present invention use the following technical solutions:

According to a first aspect, a video playback method is disclosed, including:
searching at least one media server to obtain video segments of a to-be-played video;
acquiring playback information, address information, and a decoding parameter of each video segment;
determining, according to the playback information of the video segments, usable video segments for continuous playback of the to-be-played video and an order of the usable video segments, and generating, according to the order, a playlist including the address information and the decoding parameter of each usable video segment; and
sending the playlist to a playback device, so that the playback device finds a usable video segment according to the order and according to the address information, and decodes the usable video segment by using a decoding parameter and plays the usable video segment.

With reference to the first aspect, in a first possible implementation manner of the first aspect, the playback information includes program information of the video segment, and
the searching at least one media server to obtain video segments of a to-be-played video specifically includes:
searching the at least one media server to obtain video segments matching program information of the to-be-played video, and determining the video segments matching the program information of the to-be-played video as the video segments of the to-be-played video, where the program information is identification information of the to-be-played video.

With reference to the first aspect, in a second possible implementation manner of the first aspect, the playback information further includes a start moment and an end moment of the video segment, and
the determining, according to the playback information of the video segments, usable video segments for continuous playback of the to-be-played video and an order of the usable video segments, and generating, according to the order, a playlist including the address information and the decoding parameter of each usable video segment specifically includes:
selecting, from the video segments of the to-be-played video, any video segment whose start moment is the 1st second as a first usable video segment for continuous playback of the to-be-played video;
selecting, from the video segments of the to-be-played video, any video segment including a next moment of the end moment of the first usable video segment as a second usable video segment for continuous playback of the to-be-played video;
determining playback start positions and playback end positions of the first usable video segment and the second usable video segment; and
if the end moment of the second usable video segment is an end moment of the to-be-played video, generating, according to an order of the first usable video segment and the second usable video segment, a playlist including the playback start positions, the playback end positions, the address information, and the decoding parameters of the first usable video segment and the second usable video segment; or
if it is determined that the end moment of the second usable video segment is not an end moment of the to-be-played video, searching the video segments of the to-be-played video to determine a next usable video segment until the end moment of the next usable video segment is the end moment of the to-be-played video; and determining a playback start position and a playback end position of each next usable video segment, and generating, according to the order of the usable video segments, a playlist including the playback start position, the playback end position, the address information, and the decoding parameter of each usable video segment.

With reference to a second possible implementation manner of the first aspect, in a third possible implementation manner of the first aspect, the determining playback start positions and playback end positions of the first usable video segment and the second usable video segment specifically includes:
determining the playback start position of the first usable video segment as the start moment of the first usable video segment, and setting the playback end position of the first usable video segment to a previous moment of the start moment of the second usable video segment; and determining the playback start position of the second usable video segment as the start moment of the second usable video segment, and setting the playback end position of the second usable video segment to the end moment of the second usable video segment; or
determining the playback start position of the first usable video segment as the start moment of the first usable video segment, and setting the playback end position of the first usable video segment to the end moment of the first usable video segment; and determining the playback start position of the second usable video segment as the next moment of the end moment of the first usable video segment, and setting the playback end position of the second usable video segment to the end moment of the second usable video segment.

With reference to the first aspect, in a fourth possible implementation manner of the first aspect, before the sending the playlist to a playback device, the method further includes:
receiving a playlist request message sent by the playback device.

With reference to the first aspect and the first to the fourth possible implementation manners of the first aspect, in a fifth possible implementation manner of the first aspect, the playback information further includes: duration information of the video segment and a size of the video segment, and
the playlist includes: the decoding parameter, the address information, the playback start position, the playback end position, the duration information, the start moment, and the end moment of each usable video segment of the to-be-played video and a size of each usable video segment of the to-be-played video.

According to a second aspect, a video playback method is disclosed, where the method includes:
receiving a playlist sent by a media device, finding a usable video segment according to address information and according to an order, which is indicated by the playlist, of usable video segments of a to-be-played video, and decoding the usable video segment by using a decoding parameter and playing the usable video segment.

With reference to the second aspect, in a first possible implementation manner of the second aspect, the playlist further includes:
a playback start position, a playback end position, address information, duration information, and program information of each usable video segment of the to-be-played video and a size of each usable video segment of the to-be-played video, where the program information is identification information of the to-be-played video.

With reference to the second aspect and the first possible implementation manner of the second aspect, in a second possible implementation manner of the second aspect, for any usable video segment of the to-be-played video, if the playback start position of the usable video segment is a start moment of the usable video segment,
the decoding the usable video segment by using a decoding parameter and playing the usable video segment specifically includes:
starting decoding the usable video segment from a position indicated by the start moment of the usable video segment; and
starting playback from a start position indicated by the start moment of the usable video segment, and ending playback at a position indicated by the playback end position of the usable video segment.

With reference to the second aspect and the first possible implementation manner of the second aspect, in a third possible implementation manner of the second aspect, for any usable video segment of the to-be-played video, if the playback start position of the usable video segment is not a start moment of the usable video segment,
the decoding the usable video segment by using a decoding parameter and playing the usable video segment specifically includes:
starting decoding the usable video segment from a position indicated by the start moment of the usable video segment; and
starting playback from a start position indicated by the playback start position of the usable video segment, and ending playback at a position indicated by the playback end position of the usable video segment.

With reference to the second aspect, in a fourth possible implementation manner of the second aspect, before the receiving a playlist sent by the media gateway, the method further includes:
receiving a playback request message input by a user; and
sending a playlist request message to the media device to request the playlist from the media device.

According to a third aspect, a media device is disclosed, where the media device includes:
a searching unit, configured to search at least one media server to obtain video segments of a to-be-played video;
an acquisition unit, configured to acquire playback information, address information, and a decoding parameter of each video segment;
a determining unit, configured to determine, according to the playback information of the video segments, usable video segments for continuous playback of the to-be-played video and an order of the usable video segments;
a generation unit, configured to generate, according to the order, a playlist including the address information and the decoding parameter of each usable video segment; and
a sending unit, configured to send the playlist to a playback device, so that the playback device finds a usable video segment according to the order and according to the address information, and decodes the usable video segment by using a decoding parameter and plays the usable video segment.

With reference to the third aspect, in a first possible implementation manner of the third aspect, the playback information includes program information of the video segment, and
the searching unit is specifically configured to search the at least one media server to obtain video segments matching program information of the to-be-played video, and determine the video segments matching the program information of the to-be-played video as the video segments of the to-be-played video, where the program information is identification information of the to-be-played video.

With reference to the third aspect, in a second possible implementation manner of the third aspect, the playback information further includes a start moment and an end moment of the video segment,
the determining unit is specifically configured to select, from the video segments of the to-be-played video, any video segment whose start moment is the 1st second as a first usable video segment for continuous playback of the to-be-played video; and select, from the video segments of the to-be-played video, any video segment including a next moment of the end moment of the first usable video segment as a second usable video segment for continuous playback of the to-be-played video;
the determining unit is further configured to determine playback start positions and playback end positions of the first usable video segment and the second usable video segment; and
the media device further includes a judging unit, where
the judging unit is configured to determine whether the end moment of the second usable video segment is an end moment of the to-be-played video; and
the generation unit is specifically configured to: after the judging unit determines that the end moment of the second usable video segment is the end moment of the to-be-played video, generate, according to an order of the first usable video segment and the second usable video segment, a playlist including the playback start positions, the playback end positions, the address information, and the decoding parameters of the first usable video segment and the second usable video segment; or
the determining unit is further configured to: after the judging unit determines that the end moment of the second usable video segment is not an end moment of the to-be-played video, search the video segments of the to-be-played video to determine a next usable video segment until the end moment of the next usable video segment is the end moment of the to-be-played video; and determine a playback start position and a playback end position of each next usable video segment; and
the generation unit is further configured to generate, according to the order of the usable video segments, a playlist including the playback start position, the playback end position, the address information, and the decoding parameter of each usable video segment.

With reference to the second possible implementation manner of the third aspect, in a third possible implementation manner of the third aspect, the determining unit is specifically configured to determine the playback start position of the first usable video segment as the start moment of the first usable video segment, and set the playback end position of the first usable video segment to a previous moment of the start moment of the second usable video segment; and determine the playback start position of the second usable video segment as the start moment of the second usable video segment, and set the playback end position of the second usable video segment to the end moment of the second usable video segment; or
determine the playback start position of the first usable video segment as the start moment of the first usable video segment, and set the playback end position of the first usable video segment to the end moment of the first usable video segment; determine the playback start position of the second usable video segment as the next moment of the end moment of the first usable video segment, and set the playback end position of the second usable video segment to the end moment of the second usable video segment.

With reference to the third aspect, in a fourth possible implementation manner of the third aspect, the media device further includes a receiving unit, where
the receiving unit is configured to receive a playlist request message sent by the playback device.

With reference to the third aspect and the first to the fourth possible implementation manners of the third aspect, in a fifth possible implementation manner of the third aspect, the playback information further includes: duration information of the video segment and a size of the video segment, and
the playlist includes: the decoding parameter, the address information, the playback start position, the playback end position, the duration information, the start moment, and the end moment of each usable video segment of the to-be-played video and a size of each usable video segment of the to-be-played video.

According to a fourth aspect, a playback device is disclosed, including:
a receiving unit, configured to receive a playlist sent by a media device; and
a playback unit, configured to find a usable video segment according to address information and according to an order, which is indicated by the playlist, of usable video segments of a to-be-played video, and decode the usable video segment by using a decoding parameter and play the usable video segment.

With reference to the fourth aspect, in a first possible implementation manner of the fourth aspect, the playlist further includes:
a playback start position, a playback end position, address information, duration information, and program information of each usable video segment of the to-be-played video and a size of each usable video segment of the to-be-played video, where the program information is identification information of the to-be-played video.

With reference to the fourth aspect and the first possible implementation manner of the fourth aspect, in a second possible implementation manner of the fourth aspect, for any usable video segment of the to-be-played video, if the playback start position of the usable video segment is a start moment of the usable video segment,
the playback unit is specifically configured to start decoding the usable video segment from a position indicated by the start moment of the usable video segment; and
start playback from a start position indicated by the start moment of the usable video segment, and end playback at a position indicated by the playback end position of the usable video segment.

With reference to the fourth aspect and the first possible implementation manner of the fourth aspect, in a third possible implementation manner of the fourth aspect, for any usable video segment of the to-be-played video, if the playback start position of the usable video segment is not a start moment of the usable video segment,
the playback unit is specifically configured to start decoding the usable video segment from a position indicated by the start moment of the usable video segment; and
start playback from a start position indicated by the playback start position of the usable video segment, and end playback at a position indicated by the playback end position of the usable video segment.

With reference to the fourth aspect, in a fourth possible implementation manner of the fourth aspect, the playback device further includes a sending unit, where
the receiving unit is further configured to receive a playback request message input by a user; and
the sending unit is configured to send a playlist request message to the media device to request the playlist from the media device.

According to a fifth aspect, a multimedia system is disclosed, configured to perform continuous playback of a video resource, and including: a media device, a playback device, and a media server, where
the media device is the media device in the third aspect in the foregoing technical solutions; and
the playback device is the playback device in the fourth aspect in the foregoing technical solutions.

In the video playback method, the media device, the playback device, and the multimedia system provided in the present invention, the media device searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that the playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an architectural diagram of a multimedia system according to the present invention;
FIG. 2 is a schematic flowchart of a video playback method according to Embodiment 1 of the present invention;
FIG. 3A and FIG. 3B are a schematic flowchart of a video playback method according to Embodiment 2 of the present invention;
FIG. 4 is a schematic diagram of gapless splicing of video segments according to Embodiment 2 of the present invention;
FIG. 5 is a schematic structural diagram of a media device according to Embodiment 3 of the present invention;
FIG. 6 is a schematic structural diagram of a playback device according to Embodiment 3 of the present invention;
FIG. 7 is a schematic structural diagram of a media device according to Embodiment 5 of the present invention; and
FIG. 8 is a schematic structural diagram of a playback device according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Generally, a multimedia system is formed of a media device, a playback device, and a media server, and video resources on a network are used to implement continuous playback of video segments. The media device is responsible for searching the Internet for media resources, integrating media content, and generating a playlist. The playback device is responsible for acquiring and parsing the playlist, downloading video segments, and then decoding and displaying videos. The media server is a video server or a CDN (content delivery network) server that is widely spread on the basis of the Internet.

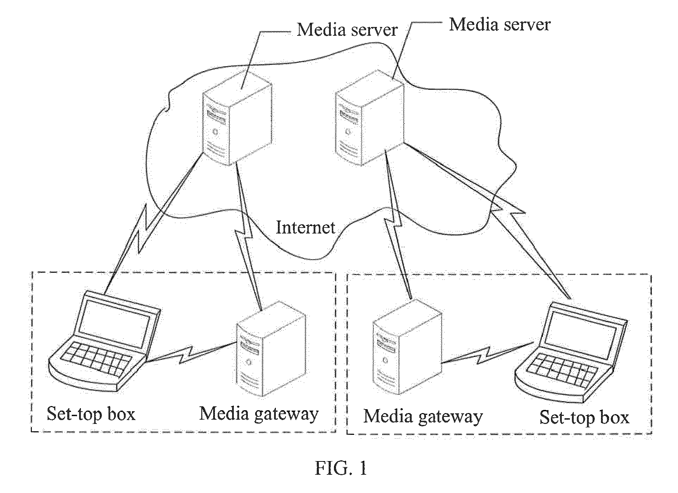

In the embodiments of the present invention, a multimedia system formed of a media gateway, a set-top box, and a media server is used as an example (certainly, the media device is not merely limited to a media gateway, and the playback device is not merely limited to a set-top box) to implement continuous playback of video segments in any format. As shown in FIG. 1, a multimedia system provided in an embodiment of the present invention includes one set-top box, one media gateway, and at least one media server.

In the prior art, an HLS technology is used to integrate video media file segments spread on the Internet to implement gapless playback. However, only video segments in a TS format are supported in the HLS technology, and a file format and an encoding format cannot change during playback. Therefore, continuous playback of video segments in any format cannot be implemented by using the HLS technology.

### Embodiment 1:

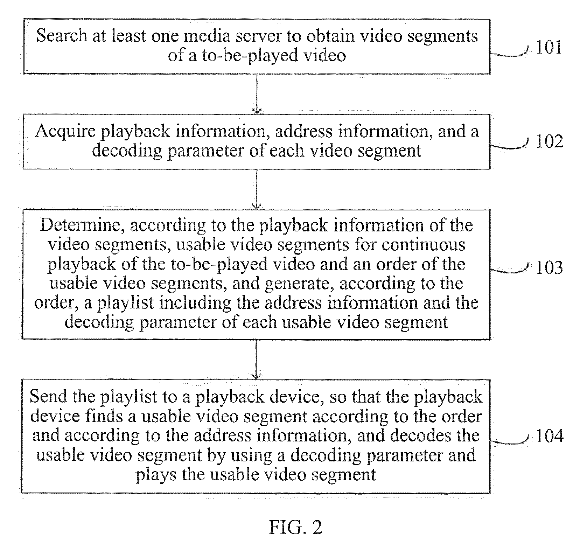

The embodiment of the present invention provides a video playback method, which is applied to a multimedia system (the multimedia system includes a media gateway, a set-top box, and at least one media server) and is executed by the media gateway. As shown in FIG. 2, the method includes the following steps:
101. Search at least one media server to obtain video segments of a to-be-played video.

Herein, the video segments are video segments in different formats; certainly, the video segments are not limited thereto in the embodiment of the present invention, and the video segments may also be in a same format (for example, all in a TS format). In short, the embodiment of the present invention aims to implement continuous playback of any video segments, so as to avoid that only continuous playback of video segments in a TS format can be implemented in the prior art.

Because the multimedia system provided in the embodiment of the present invention includes one media gateway, one set-top box, and at least one media server, when a system includes two (or more than two) media servers, video segments found by the media gateway may be video segments that are from different media servers and in different formats. Certainly, duration of the video segments may also be different.

In a specific implementation, the media gateway searches the at least one media server to obtain video segments matching program information of the to-be-played video, and determines these video segments matching the program information of the to-be-played video as the video segments of the to-be-played video. The program information is identification information of the to-be-played video. The identification information of the video may be a name of the video or release time, director information, and cast information of the video; certainly, the identification information of the video is not limited thereto, and may also be an identifier that uniquely corresponds to the video.
102. Acquire playback information, address information, and a decoding parameter of each video segment.

In existing standards, a video is segmented to obtain a large quantity of video segments, and the video segments are delivered to a media server. The media server records playback information, address information, and decoding parameters of the video segments. The playback information includes duration information, a start moment, an end moment, and program information of the video segment and a size of the video segment.

Therefore, the media gateway may acquire, while finding the video segments matching the to-be-played video, related information about these video segments.
103. Determine, according to the playback information of the video segments, usable video segments for continuous playback of the to-be-played video and an order of the usable video segments, and generate, according to the order, a playlist including the address information and the decoding parameter of each usable video segment.

The media gateway edits and splices, according to the start moment and the end moment of each video segment, video segments matching the to-be-played video, so as to generate the playlist that enables the set-top box to perform continuous playback of the to-be-played video.

Specifically, the media gateway selects, from the video segments of the to-be-played video, any video segment whose start moment is the 1 st second as a first usable video segment for continuous playback of the to-be-played video.

The media gateway selects, from the video segments of the to-be-played video, any video segment including a next moment of the end moment of the first usable video segment as a second usable video segment for continuous playback of the to-be-played video.

The media gateway determines playback start positions and playback end positions of the first usable video segment and the second usable video segment; and
if the end moment of the second usable video segment is an end moment of the to-be-played video, generates, according to an order of the first usable video segment and the second usable video segment, a playlist including the playback start positions, the playback end positions, the address information, and the decoding parameters of the first usable video segment and the second usable video segment; or
if it is determined that the end moment of the second usable video segment is not an end moment of the to-be-played video, searches video segments of the to-be-played video to determine a next usable video segment until the end moment of the next usable video segment is the end moment of the to-be-played video; and determines a playback start position and a playback end position of each next usable video segment, and generates, according to the order of the usable video segments (including the first usable video segment and the second usable video segment), a playlist including the playback start position, the playback end position, the address information, and the decoding parameter of each usable video segment.

Certainly, the playlist further includes the program information, the duration information, the start moment, and the end moment of each usable video segment of the to-be-played video and a size of each usable video segment, and may also include other information, which is no longer limited herein.
104. Send the playlist to a playback device, so that the playback device finds a usable video segment according to the order and according to the address information, and decodes the usable video segment by using a decoding parameter and plays the usable video segment.

Exemplarily, the media gateway may deliver the generated playlist to the set-top box, so that the set-top box may find, according to the order of the usable video segments of the to-be-played video in the playlist according to the address information, a usable video segment, and decode the usable video segment according to the decoding parameter of the usable video segment in the playlist and play the usable video segment, so as to implement continuous playback of the usable video segments of the to-be-played video.

A playlist in the prior art does not include any parameter related to decoding, or only includes a decoding parameter in a TS format, and therefore continuous playback of only video files in a TS format can be implemented in an existing HLS technology. In step 101 in the embodiment of the present invention, different media servers are searched to obtain video segments in different formats, and the playlist including the decoding parameter of each usable video segment of the to-be-played video is generated, so as to enable the set-top box to decode the video segments in different formats according to the generated playlist, thereby implementing continuous playback of any video segments.

Preferably, in an exemplary embodiment of the present invention:
1) The media gateway selects, from the video segments of the to-be-played video, any video segment whose start moment is the 1st second and whose duration is the longest as a first usable video segment for continuous playback of the to-be-played video.
   Exemplarily, if the end moment of the first usable video segment is the 10th second, and two video segments A and B include the 11th second, where A is a segment (TS format) from the 5th second to the 20th second of the to-be-played video, and B is a segment (MP4) from the 10th second to the 30th second of the to-be-played video, because selection of a video segment having longer duration can reduce complexity of continuous playback, herein the video segment B is used as a second usable video segment for the to-be-played video.
2) The media gateway selects, from the video segments of the to-be-played video, a video segment that includes a next moment of the end moment of the first usable video segment and has the longest duration as the second usable video segment for continuous playback of the to-be-played video.
   Generally, an interval between two frames is tens of milliseconds, and many frames are included in two seconds. Therefore, the end moment of the first usable video segment is not particularly a next second. In a specific implementation, according to a timestamp in a code stream, a latest timestamp is used as a next moment.
3) The media gateway determines playback start positions and playback end positions of the first usable video segment and the second usable video segment.
4) If the end moment of the second usable video segment is the end moment of the to-be-played video, generate, according to an order of the first usable video segment and the second usable video segment, a playlist including the playback start positions, the playback end positions, the address information, and the decoding parameters of the first usable video segment and the second usable video segment.
5) If it is determined that the end moment of the second usable video segment is not an end moment of the to-be-played video, search the video segments of the to-be-played video to determine a next usable video segment until the end moment of the next usable video segment is the end moment of the to-be-played video. Herein, when each next usable video segment is determined, a video segment that includes a next moment of an end moment of a previous usable video segment and has the longest duration is determined as a currently determined usable video segment of the to-be-played video.
   Exemplarily, the media gateway uses a video segment having the longest duration, from video segments that include a next moment of the end moment of the second usable video and are in a matching video segment set of the to-be-played video, as a third video segment. The media gateway uses a video segment having the longest duration, from video segments that include a next moment of the end moment of a third usable video segment in the video segments of the to-be-played video, as a fourth usable video segment. Repeat the foregoing operation, until the end moment of the last determined usable video segment is the end moment of the to-be-played video. In this way, the decoding parameters and the playback information of these determined video segments are written into the playlist to enable the set-top box to decode these video segments in different formats, so as to implement continuous playback of the to-be-played video according to the playback information of the video segments.
6) Determine a playback start position and a playback end position of each next usable video segment, and generate, according to the order of the usable video segments (including the first usable video segment and the second usable video segment), a playlist including the playback start position, the playback end position, the address information, and the decoding parameter of each usable video segment.

In addition, continuous playback of video segments A and B in different formats cannot be performed in the prior art. In step 102 of the embodiment of the present invention, the decoding parameter of each video segment of the to-be-played video is acquired, and the playlist generated in step 103 includes the decoding parameter of each usable video of the to-be-played video; therefore, the set-top box may decode the first usable video segment and the second usable video segment according to the decoding parameters of the first usable video segment and the second usable video segment in the playlist sent by the media gateway. Next, the set-top box further plays, according to the playback start position and the playback end position of the first usable video segment and the playback start position and the playback end position of the second usable video segment in the playlist, the first usable video segment and the second usable video segment.

It should be noted that, the media gateway may determine a playback start position and a playback end position of each usable video segment in two manners, which include: for two usable video segments adjacent in order, the media gateway edits the former usable video segment, or edits the latter usable video segment.

For the two usable video segments adjacent in order, the manners specifically include: determining a playback start position of the former usable video segment as a start moment of the former usable video segment, and setting a playback end position of the former usable video segment to a previous moment of a start moment of the latter usable video segment; and determining a playback start position of the latter usable video segment as the start moment of the latter usable video segment; herein, the setting of a playback end position of the latter usable video segment is not limited, where an end moment of the latter usable video segment may be set, or a new playback end position may also be set; or
determining a playback start position of the former usable video segment as a start moment of the former usable video segment, and setting a playback end position of the former usable video segment to an end moment of the former usable video segment; and determining a playback start position of the latter usable video segment as a next moment of an end moment of the former usable video segment, and setting a playback end position of the latter usable video segment to an end moment of the latter usable video segment.

It should be noted that herein the playback start position of the former usable video segment and the playback end position of the latter usable video segment are not limited thereto. The playback start position of the former usable video segment may also be a playback start position obtained after the media gateway performs editing, and the playback end position of the latter usable video segment may similarly be a playback end position obtained after the media gateway performs editing.

Herein, the first usable video segment (the 1st second to the 20th second of the to-be-played video) and the second usable video segment (the 15th second to the 40th second of the to-be-played video) are used as an example to introduce two methods for determining a playback start position and a playback end position of a usable video segment. It should be noted that the "edit" in the embodiment of the present invention is not to edit video content, but instead is to generate a new playback start position and playback end position to implement continuous playback. In addition, for ease of understanding, a next moment of an end moment of a video segment is set to a next second of the end moment of the video segment (similarly, for ease of understanding, in the embodiment of the present invention, a next moment of a start moment of the video segment is set to a previous second of the start moment of the video segment, and the description is provided herein. During actual splicing, a previous moment and a next moment of a video segment are both time points closest to the moment, and are not limited to a previous second and a next second).

First, if a first usable video (that is, the foregoing former usable video) is edited, a playback start position of the first usable video is determined as the 1 st second of the first usable video (a start moment of the first usable video), and a playback end position of the first usable video is determined as the 14th second of the first usable video (a previous moment of a start moment of a second usable video). A playback start position of the second usable video is determined as the 15th second of the second usable video (the start moment of the second usable video), and a playback end position of the second usable video is determined as the 40th second of the second usable video (an end moment of the second usable video).

Second, if a second usable video (that is, the foregoing latter usable video) is edited, a playback start position of a first usable video is determined as the 1 st second of the first usable video (a start moment of the first usable video), and a playback end position of the first usable video is determined as the 20th second of the first usable video (an end moment of the first usable video). A playback start position of the second usable video is determined as the 21st second of the second usable video (a next moment of the end moment of the first usable video), and a playback end position of the second usable video is determined as the 40th second of the second usable video (an end moment of the second usable video). Certainly, the playback end position of the second usable video is not limited to the 40th second of the second usable video, and there may further be other cases, which are not elaborated herein.

It should be noted that when a video resource is segmented to obtain video segments, duration of the video segments is not specified. In this way, video segments in a same media server may have same duration, or may also have different duration. Similarly, video segments in different media servers may also have same duration, or may also have different duration. A media server records attribute information of each video segment, that is, which part of which video the video segment is. For example, a media server records a video segment being the 20th second to the 40th second of a movie A.

In this way, to avoid repetition of content, the media gateway needs to edit video segments having different duration (media content is not aligned) (not to edit content of the video segments, but instead, generate a new playback start position). For example, the first usable video segment (in a TS format) found by the media gateway is the 1st second to the 20th second of the to-be-played video (for example, a movie A), and the second usable video segment (in an MP4 format) is the 10th second to the 40th second of the movie A; it is easily known that the 10th second to the 20th second of the first usable video segment and the 10th second to the 20th second of the second usable video segment are both content of the 10th second to the 20th second corresponding to the to-be-played video, and only have different formats. Therefore, the playback start position of the second usable video segment generated by the media gateway should avoid repetition of the content of the first usable video segment, that is, the playback start position of the second usable video segment is the 21 st second of the movie A.

Preferably, in an exemplary embodiment of the present invention, before the media gateway sends the playlist to a playback device, the method further includes:
receiving, by the media gateway, a playlist request message sent by the playback device (which may be the set-top box in the embodiment of the present invention).

Herein, no limitation is imposed, and the media gateway may generate the playlist in advance, and deliver, after receiving the playlist request message sent by the set-top box, the generated playlist to the set-top box.

It may also be that the media gateway rapidly generates a playlist after receiving the playlist request message sent by the set-top box, and then deliver the generated playlist to the set-top box.

Preferably, in an exemplary embodiment of the present invention, the playback information further includes: duration information of the video segment and a size of the video segment, and
the playlist includes: the decoding parameter, the address information, the playback start position, the playback end position, the duration information, the start moment, and the end moment of each usable video segment of the to-be-played video and a size of each usable video segment of the to-be-played video.

Preferably, in an exemplary embodiment of the present invention, the method further includes:
arranging, by the media gateway, video segments whose start moments and end moments are the same in the video segments matching the program information of the to-be-played video, in a descending order of resolution, so that the set-top box plays a video segment matching a current network state in the video segments whose start and end moments are the same.

Exemplarily, the media gateway may find multiple segments from the 1st second to the 20th second of the to-be-played video, and these segments from the 1 st second to the 20th second are all video segments having the same content. However, the video segments may be different in resolution, and when generating related information corresponding to the to-be-played video in the playlist, the media gateway may write all the playback information, of these segments from the 1st second to the 20th second (including the address information, the duration information, the playback start and end positions, and the size) into the playlist, and arrange the video segments in a descending order of resolution. Therefore, the set-top box may play a segment matching a current network condition according to the current network condition. For example, a video segment having relatively low resolution is played when a network state is poor.

The embodiment of the present invention further provides a video playback method, applied to a multimedia system, and executed by a set-top box. The method includes:
receiving, by a playback device (which may be a set-top box), a playlist sent by a media device (which may be a media gateway), finding a usable video segment according to address information and according to an order, which is indicated by the playlist, of usable video segments of a to-be-played video, and decoding the usable video segment by using a decoding parameter and playing the usable video segment.

The usable video segments of the to-be-played video are video segments that are in different formats and from a same media server, or are video segments that are in different formats and from different media servers. Certainly, the video segments are not limited thereto in the embodiment of the present invention. The video segments may also be video segments in a same format (all in a TS format) and from different media servers. Alternatively, the video segments may also be video segments in a same format (all in a TS format) and from a same media server. In short, the embodiment of the present invention aims to implement continuous playback of any video segments.

Herein, the video segments that are found by the media gateway in advance and match the to-be-played video may be in different formats, and therefore usable video segments of the to-be-played video that are determined by the media gateway from the video segments matching the to-be-played video may also be video segments in different formats. The set-top box may acquire each usable video segment in order according to the address information of the usable video segments included in the playlist, and decode each usable video segment according to the decoding parameter and play each usable video segment, thereby further implementing continuous playback of usable video segments in various formats. This is different from that in the prior art, a set-top box only supports splicing and playback of video segments from a same source.

In the prior art, only continuous playback of video segments in a TS format is supported in HLS, a playlist generated by a media gateway does not include any decoding information (or only includes a decoding parameter in a TS format), and the set-top box can only decode and play video segments in a TS format. In the method provided in the present invention, the playlist generated by the media gateway includes decoding parameters for usable video segments in various formats, and the set-top box receives a playback request of a user and requests the playlist from the media gateway, receives the playlist delivered by the media gateway, then can decode the usable video segments in various formats according to the decoding parameters included in the playlist, and then can play a video formed of video segments in various formats.

In an exemplary embodiment of the present invention, before a playback device (which may be a set-top box) receives a playlist sent by a media device (which may be a media gateway), the method further includes:
receiving a playback request message input by a user, and sending a playlist request message to the media device (which may be the media gateway) to request the playlist from the media device (which may be the media gateway).

Specifically, the set-top box generates the playback request message according to an operation of the user, where the playback request message carries program information of a video that the user requests to play. Herein, the program information of the video that is requested to be played includes: at least one of release time, director information, and cast information of the video.

Preferably, in an exemplary implementation of the present invention, the playlist further includes:
a playback start position, a playback end position, address information, duration information, and program information of each usable video segment of the to-be-played video and a size of each usable video segment of the to-be-played video, where the program information is identification information of the to-be-played video.

Preferably, in an exemplary implementation of the present invention, for any usable video segment of the to-be-played video, if a playback start position of the usable video segment is a start moment of the usable video segment,
the set-top box starts decoding the usable video segment from a position indicated by a start moment of the usable video segment, starts playback from a start position indicated by the start moment of the usable video segment, and ends playback at a position indicated by the playback end position of the usable video segment.

If the playback start position of the usable video segment is not a start moment of the usable video segment,
the set-top box starts decoding the usable video segment from the position indicated by the start moment of the usable video segment; starts playback from a start position indicated by the playback start position of the usable video segment, and ends playback at a position indicated by the playback end position of the usable video segment.

It should be noted that when decoding a video segment, the set-top box is required to start decoding from a key frame (I frame); however, to achieve gapless playback, the set-top box does not necessarily start playback from a key frame, and may start playback from any frame (that is, a position indicated by information about a playback start and end position in the playlist).

In the video playback method provided in the present invention, a media device searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that a playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

### Embodiment 2:

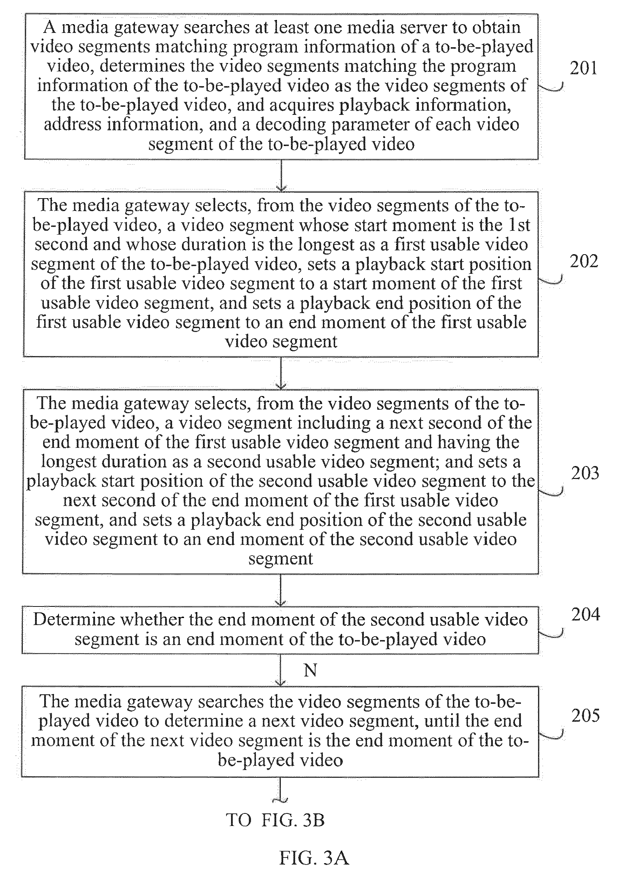

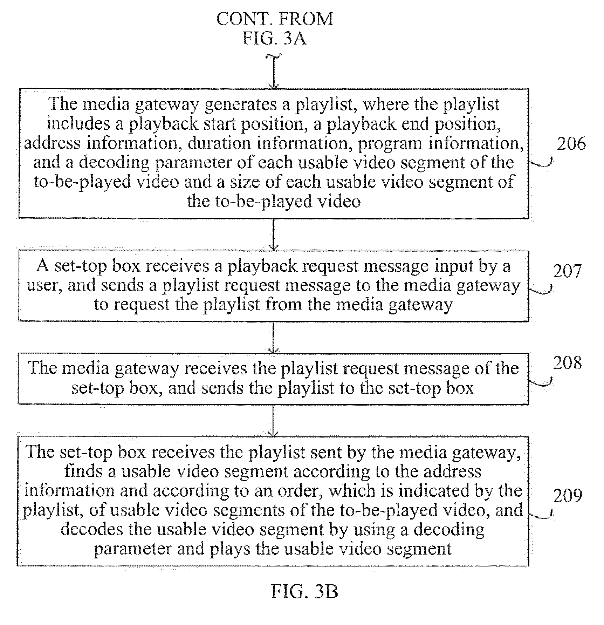

The embodiment of the present invention provides a video playback method applied to a multimedia system. As shown in FIG. 3A and FIG. 3B, the method includes the following steps:
201. A media gateway searches at least one media server to obtain video segments matching program information of a to-be-played video, determines the video segments matching the program information of the to-be-played video as the video segments of the to-be-played video, and acquires playback information, address information, and a decoding parameter of each video segment of the to-be-played video.

The playback information of the video segment includes: duration information, a start moment, an end moment, and program information of the video segment. The video segments of the to-be-played video may be video segments in different formats.

The media server in the multimedia system provided in the embodiment of the present invention is a video server or a CDN server, and therefore the media gateway may perform searching to obtain a large quantity of video segments. In a specific implementation, decoding parameters for these video segments, for example, SPS/PPS (Sequence Parameter Set /Picture Parameter Set) information required for initialization of an H.264 decoder, are acquired. The video segments are video segments that are in different formats and from a same media server. Alternatively, the video segments are video segments that are in different formats and from different media servers. Certainly, the video segments are not limited thereto in the embodiment of the present invention. The video segments may also be video segments in a same format (all in a TS format) and from different media servers. Alternatively, the video segments may also be video segments in a same format (all in a TS format) and from a same media server. In short, the embodiment of the present invention aims to implement continuous playback of any video segments.

In addition, in existing standards, when a video resource is segmented to obtain video segments, duration of the video segments is not specified. In this way, video segments in a same media server may have same duration, or may also have different duration. Similarly, video segments in different media servers may also have same duration, or may also have different duration. A media server records a start moment and an end moment of each video segment, that is, which part of which video the video segment is. For example, a media server records a video segment being the 20th second to the 40th second of a movie A.

The program information of the video segment is identification information of the video segment, and may be a name of a video corresponding to the video segment, or may also be release time, director information, and the like of a video corresponding to the video segment. In short, one video may be uniquely determined according to the program information of the to-be-played video, so as to further determine multiple video segments corresponding to the video. For example, according to the name "Titanic", one video is uniquely determined, or one video may also be uniquely determined according to a director, cast, release time, and the like.

Herein, in the acquired video segments matching the program information, of the to-be-played video, the video segments may have different duration and may be in different formats. Exemplarily, video segments having duration of 10s, 20s, 35s, and the like may exist in a matching video segment set matching the movie A.
202. The media gateway selects, from the video segments of the to-be-played video, a video segment whose start moment is the 1st second and whose duration is the longest as a first usable video segment of the to-be-played video, sets a playback start position of the first usable video segment to a start moment of the first usable video segment, and sets a playback end position of the first usable video segment to an end moment of the first usable video segment.

It should be noted that herein the media gateway does not edit the first usable video segment, and therefore sets the playback end position of the first usable video segment to the end moment of the first usable video segment. The first usable video segment refers to a first video segment in video segments for continuous playback of a video, and the start moment of the first usable video segment is required to be the first second of the video.

When the first usable video segment for continuous playback of the to-be-played video is determined, a video segment having the longest duration is selected from video segments whose start moments are the same (that is, are all the 1 st second of the video). In this way, fewer video segments may be used to implement continuous playback of the video, thereby reducing complexity of continuous playback. For example, for a video whose duration is 100s, it is obviously simpler to select 5 video segments whose duration is 20s each than to select 10 video segments whose duration is 10s each to implement continuous playback. Therefore, the use of a video segment whose start moment is the 1st second and whose duration is the longest as the first usable video segment reduces complexity of continuous playback.

Exemplarily, if in video segments matching the movie A, there are a video segment a that has duration of 10s and corresponds to the 1 st second to the 10th second of the movie A and a video segment b that has duration of 20s and corresponds to the 1st second to the 20th second of the movie A, obviously the selection of the video segment b whose duration is longer reduces complexity of continuous playback.

In addition, the media gateway may also edit the first usable video segment to generate a new playback end position, and only needs to set the playback start position of the first usable video segment to the start moment of the first usable video segment, and determine the playback end position of the first usable video segment according to a specific condition of a next usable video segment.
203. The media gateway selects, from the video segments of the to-be-played video, a video segment including a next moment of the end moment of the first usable video segment and having the longest duration as a second usable video segment; and sets a playback start position of the second usable video segment to the next moment of the end moment of the first usable video segment, and sets a playback end position of the second usable video segment to an end moment of the second usable video segment.

It should be noted that herein the second usable video segment refers to a second video segment in the usable video segments for continuous playback of the to-be-played video, and the start moment of the second usable video segment is not necessarily the next moment of the end moment of the first usable video segment and only needs to include the next moment of the end moment of the first usable video segment. Certainly, the start moment of the second usable video segment being the next moment of the end moment of the first usable video segment reduces complexity of continuous playback, and the media gateway does not need to edit the second usable video segment. For example, the end moment of the first usable video segment is the 20th second of the video, and the second usable video segment is required to include the 21st second (the next moment of the end moment of the first usable video segment) of the video.

Similarly, in step 202, in video segments that include the next moment of the end moment of the first usable video segment, a video segment having the longest duration also needs to be selected as the second usable video segment. It should be noted herein that a start moment of a video segment including the next moment of the end moment of the first usable video segment is not necessarily the next moment of the end moment of the first usable video segment, and may also be a moment before the next moment of the end moment of the first usable video segment. In this case, the media gateway needs to edit the determined second usable video segment to determine the playback start position and the playback end position of the second usable video segment. Because the second usable video segment and the first usable video segment include the same content, the playback start position of the second usable video segment needs to be set according to the next moment of the end moment of the first usable video segment.

Exemplarily, the end moment of the first usable video segment is the 20th second of the to-be-played video, and the media gateway searches the video segments matching the to-be-played video to acquire that video segments including the 21 st second of the to-be-played video are a video segment 1 (corresponding to the 21st second to the 30th second of the to-be-played video), a video segment 2 (corresponding to the 20th second to the 33rd second of the to-be-played video), and a video segment 3 (corresponding to the 10th second to the 40th second of the to-be-played video), and determines the video segment 3 having the longest duration as the second usable video segment.

In addition, because the 10th second to the 20th second of the video segment 3 (that is, the second usable video segment in step 203) and the 10th second to the 20th second of the first usable video segment are the same content in the to-be-played video, to avoid repetitive playback, the media gateway sets the playback start position of the second usable video segment to the next moment of the end moment of the first usable video segment, and sets the playback end position of the second usable video segment to the end moment of the second usable video segment.
204. Determine whether the end moment of the second usable video segment is an end moment of the to-be-played video.

If the end moment of the second usable video segment is the end moment of the to-be-played video, a playlist of the to-be-played video that is generated by the media gateway includes playback information, the address information, and the decoding parameters of the first usable video segment and the second usable video segment.

If the end moment of the second usable video segment is not an end moment of the to-be-played video, perform step 205.
205. The media gateway searches the video segments of the to-be-played video to determine a next video segment, until the end moment of the next video segment is the end moment of the to-be-played video.

Herein, a method used by the media gateway to determine other video segments for implementing continuous playback of the to-be-played video is the same as the method for determining the second usable video segment in step 203. Certainly, every time after a video segment is determined, determining also needs to be performed according to the method in step 204, until the end moment of the determined video segment is the end moment of the to-be-played video.

Exemplarily, it is determined in step 204 that the end moment of the second usable video segment is the 40th second of the to-be-played video, and the media gateway searches the video segments of the to-be-played video for video segments whose start moments include the 41st second of the to-be-played video, so as to obtain a video segment 4 (corresponding to the 41st second to the 50th second of the to-be-played video), a video segment 5 (corresponding to the 30th second to the 70th second of the to-be-played video), and a video segment 6 (corresponding to the 40th second to the 50th second of the to-be-played video), and determines the video segment 5 having the longest valid duration (that is, a duration obtained after content repetitive with that of a previous video segment is removed) as a third usable video segment.

In addition, because the 30th second to the 40th second of the video segment 5 (that is, the third usable video segment) and the 30th second to the 40th second of the second usable video segment are the same content in the to-be-played video, to avoid repetitive playback, the media gateway sets a playback start position of the third video segment to a next moment (that is, the 41st second of the to-be-played video) of the end moment of the second usable video segment, and sets a playback end position of the third usable video segment to an end moment (that is, the 70th second of the to-be-played video) of the third usable video segment.

For ease of understanding, herein the movie "The Message" (running time 6840s) is used as an example to introduce a procedure in which the media gateway acquires a playback start position and a playback end position of each video segment in a playback video segment set in each video.
1) The media gateway searches an initial video segment set acquired in step 201 for video segments with the name "The Message", and certainly, may also search video segments released in 2000 (release time of the movie "The Message"), directed by Gao Qunshu (the director of the movie "The Message"), and starring Zhou Xun and Li Bingbing. That is, a matching video segment set of the movie "The Message" is acquired.
2) The media gateway searches the matching video segment set of the movie "The Message" to acquire video segments whose start moments are the 1 st second of the movie "The Message", and determines, in these video segments whose start moments are the 1st second of the movie "The Message", a video segment having the longest duration as a first usable video segment of the movie "The Message". The start moment of the first usable video segment is the 1 st second of the movie "The Message", and the end moment is the 10th second of the movie "The Message".
3) The media gateway searches the matching video segment set of the movie "The Message" to acquire video segments including the 11th second of the movie "The Message". In the video segments including the 11th second of the movie "The Message", a video segment having the longest duration is determined as a second usable video segment of the movie "The Message". A start moment of the second usable video segment is the 8th second of the movie "The Message", and an end moment is the 30th second of the movie "The Message".
4) The media gateway searches the matching video segment set of the movie "The Message" to acquire video segments including the 31st second of the movie "The Message". In the video segments including the 31st second of the movie "The Message", a video segment having the longest duration is determined as a third video segment of the movie "The Message". A start moment of the third video segment is the 2nd second of the movie "The Message", and an end moment is the 70th second of the movie "The Message".
5) The media gateway determines, according to the method for determining the second usable video segment and the third video segment of the movie "The Message", other video segments for continuous playback of the movie "The Message", until an end moment of a last determined video segment is the 6840^{th} second of the movie "The Message". So far, the media gateway may determine each video segment in the playback video segment set of the movie "The Message".
6) The media gateway determines a playback start position and a playback end position of each video segment in the playback video segment set of the movie "The Message".

Certainly, the media gateway may also determine, as in steps 203 and 204, every time after a video segment (a video segment for continuous playback of the movie "The Message") is determined, a playback start position and a playback end position of the video segment. Specifically, after determining the first usable video segment of the movie "The Message", the media gateway sets the playback start position of the first usable video segment to the 1st second, and sets the playback end position to the 10th second. The playback start position of the second usable video segment is set to the 11th second, and the playback end position is set to the 30th second. The playback start position of the third video segment is set to the 31st second, and the playback end position is set to the 70th second.

206. The media gateway generates a playlist, where the playlist includes a playback start position, a playback end position, address information, duration information, program information, and a decoding parameter of each usable video segment of the to-be-played video and a size of each usable video segment of the to-be-played video.

It should be noted that for video segments having the same content (that is, video segments that have the same start moments and end moments and correspond to a same video), if these video segments having the same content can all be used to implement continuous playback of the video, the playlist generated by the media gateway also includes related information about these video segments having the same content; however, these video segments having the same content need to be arranged in a descending order of resolution, so that a set-top box plays a video segment matching a current network state in the video segments having the same start and end moments. Exemplarily, if it is determined in the foregoing procedure that the first usable video segments of the movie "The Message" include a video segment X having ultrahigh resolution, a video segment Y having high resolution, and a video segment Z having normal resolution, and certainly, the start moments of the video segments X, Y, and Z are all the 1st second of the movie "The Message", and the end moments are all the 10th second of the movie "The Message", the playlist generated by the media gateway includes playback start positions and playback end positions (no matter whether the media gateway edits the video segments having the same content, playback start and end positions of the video segments are the same), address information, duration information, program information, and decoding parameters of the video segments X, Y, and Z and sizes of the video segments X, Y, and Z. Certainly, the resolution of the video segments X, Y, and Z may also be written into the playlist, so that the set-top box may play a video segment matching a current network state. Exemplarily, when a network state is poor, Z having relatively low resolution is selected for playback.

The generated playlist may be shown in Table 1.

**Table 1**

| |
|---|
| #HISPLAY |
| #HISPLAY_START_SEAMLESS |
| #HISPLAY_STREAM:334.00 |
| 3500_ASP_350K.mp4 |
| #HISPLAY_STREAM:269.00 |
| #HISPLAY_BYTERANGE:667588@1346456 |
| #HISPLAY_CODECPRIVATEDATA:000000016764001FAC2CA 5014016EFFC100010014808080A000007D200017700C100005A64 8000B4C9FE31C6080002D3240005A64FF18E1DA122516000000 00168E9093525 |
| 3500_ASP_500K.mp4 |
| #HISPLAY_STREAM:281.00 |
| #HISPLAY_BYTERANGE:662459 |
| 3500_ASP_800K.mp4 |
| #HISPLAY_ENDLIST |

START_SEAMLESS is the header of the playlist, representing that the list is a gapless playlist. STREAM:334.00 is the total duration of the list. 3500_ASP_350K.mp4 represents a name and a relative path of a segment. STREAM:269.00 represents duration of a segment. BYTERANGE:667588@1346456 is a valid content offset and length of the segment. CODECPRIVATEDATA:000000016764001FAC2CA5014016EFFC100010014808080A000007D2 00017700C100005A648000B4C9FE31C6080002D3240005A64FF18E1DA12251600000000168E 9093525 is a decoding parameter. BYTERANGE:662459 represents the total length of the segments, and the offset starts from 0 by default. ENDLIST represents that the playlist ends.
207. A set-top box receives a playback request message input by a user, and sends a playlist request message to the media gateway to request the playlist from the media gateway.

The playback request message may carry program information of a video that the user requests to play. The program information of the video that is requested to be played includes: release time, director information, cast information, and the like of the video.

In a specific implementation, the user operates the set-top box to request the media gateway to provide the playlist, so as to select a program of interest from the playlist provided by the media gateway for playback.
208. The media gateway receives the playlist request message of the set-top box, and sends the playlist to the set-top box.

The media gateway sends the playlist to the set-top box, so that the set-top box performs continuous playback of the video segments according to the playlist.

The media gateway searches mainstream and popular media servers for media resources in advance by using idle time, categorizes the video segments according to program information, and generates the playlist. For example, the video segments are categorized according to director information, that is, works of a same director are categorized, so that the user may select, according to program information included in the playlist, a program of interest for playback.
209. The set-top box receives the playlist sent by the media gateway, finds a usable video segment according to the address information and according to an order, which is indicated by the playlist, of usable video segments of the to-be-played video, and decodes the usable video segment by using a decoding parameter and plays the usable video segment.

The usable video segments of the to-be-played video include video segments in different formats. The playlist includes: a playback start position, a playback end position, address information, duration information, and program information of each usable video segment of the to-be-played video and a size of each usable video segment of the to-be-played video. The program information is identification information of the to-be-played video.

A video (for example, a movie A) is used as an example. For any video segment in a playback video segment set of the video:
If a playback start position of the video segment is a start moment of the video segment (that is, the media gateway does not edit the video segment),
the set-top box acquires the video segment according to address information of the video segment, and starts decoding the video segment from a position indicated by the start moment of the video segment; and
starts playback from a start position indicated by the start moment of the video segment, and ends playback at a position indicated by a playback end position of the video segment.

If a playback start position of the video segment is not a start moment of the video segment,
the set-top box acquires the video segment and then starts decoding the video segment from a position indicated by the start moment of the video segment.

The set-top box starts playback from a position indicated by the playback start position of the video segment, and ends playback at a position indicated by the playback end position of the video segment.

In this way, by using the method provided in the present invention, decoding parameters of video segments are written into a playlist, so that a set-top box may perform continuous playback of video segments in different formats. Actual addresses of the video segments from different sources (from different media server sources) are written into the playlist, so that the set-top box may acquire the video segments from different sources according to the playlist to implement continuous playback of the video segments from different sources. The video segments are edited, and new playback start positions and playback end positions are written into the playlist, so that the set-top box may acquire, according to the playlist, correct positions to start playback and correct positions to end playback, thereby implementing continuous playback of video segments having unaligned media content. In conclusion, different from the prior art in which only continuous playback of video segments in a TS format is supported, in the video playback method provided in the present invention, continuous playback of video segments in different formats and from different sources is supported.

In addition, for video segments different in encapsulation formats, a set-top box loads different encapsulation format parsers to implement gapless splicing and continuous playback of video segments in different encapsulation formats.

In the video playback method provided in the present invention, a media device searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that a playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

In Embodiment 2, when the playback start position and the playback end position of each usable video segment of the to-be-played video are determined, a latter usable video segment is edited. For example, the playback start position of the first usable video segment is set to the start moment of the first usable video segment, and the playback end position of the first usable video segment is set to the end moment of the first usable video segment. The playback start position of the second usable video segment is set to the next moment of the end moment of the first usable video segment, and the playback end position of the second usable video segment is set to the end moment of the second usable video segment.

When determining the playback start position and the playback end position of each usable video segment of the to-be-played video, the media gateway may also edit a former usable video segment. That is, the playback start position of the first usable video segment is set to the start moment of the first usable video segment, and the playback end position of the first usable video segment is set to a previous second of the start moment of the second usable video segment. The playback start position of the second usable video segment is set to the start moment of the second usable video segment. In this case, the playback end position of the second usable video segment may be not the end moment of the second usable video segment, and needs to be set by the media gateway according to a next usable video segment.

In short, editing by the media gateway is not limited, where a latter usable video segment may be edited, or a former usable video segment may also be edited, or splicing and editing may also be performed according to a specific condition, which is not limited herein.

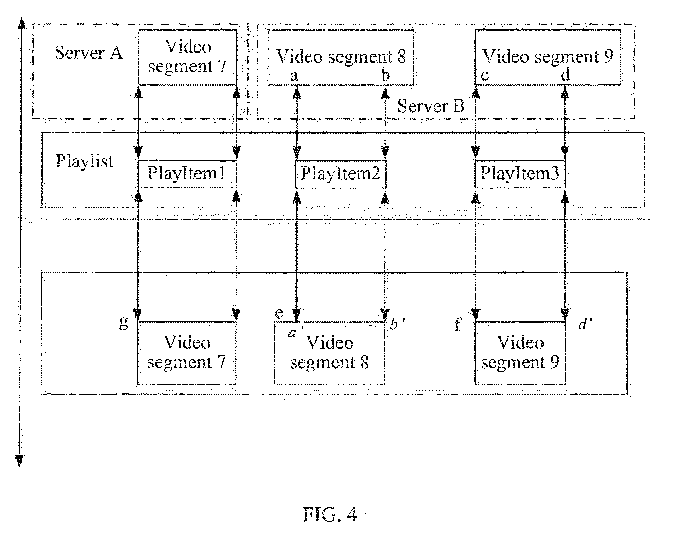

Exemplarily, as shown in FIG. 4, if the media gateway edits video segments 2 and 3, a video segment 1 is not edited.

A video segment 7 is a video segment found by the media gateway in a media server A, and video segments 8 and 9 are two video segments found by the media gateway in a server B (that is, the video segment 7 and the video segments 8 and 9 are video files from different sources). According to an editing action of the media gateway, in the playlist generated by the media gateway, a playback start position corresponding to the video segment 1 is a start moment of the video segment 7; a playback start position corresponding to the video segment 8 is a shown in the figure, and a playback end position is b shown in the figure; a playback start position corresponding to the video segment 9 is c shown in the figure, and a playback end position is d shown in the figure. Specifically, a start point and an end point of actual playback of the video segment are defined in PlayItem in the drawing, and the media gateway records PlayItem in a PlayList.

In short, the set-top box plays a film according to playback start and end positions of video segments; however, for each video segment, decoding needs to start from a key frame of the video segment (that is, a start moment of the video segment). Regardless of whether a playback start position of each video segment in the playlist indicates a start moment of the video segment, after receiving the playlist, the set-top box needs to start decoding from a key frame (which may also be referred to as an I frame) (e, f, and g shown in the figure) of each video segment, and during playback, plays the video segment according to a position (that is, a position specified in PlayItem, where the position is not necessarily the start of an I frame of the video segment) indicated by the playback start position of each video segment in the playlist. With reference to FIG. 4, for the video segment 2, during decoding, decoding needs to start from e shown in the figure, and playback starts from *a'* and ends at *b'*. Certainly, the video segment 7, the video segment 8, and the video segment 9 may have different formats, and the set-top box may decode the video segments according to respective decoding parameters corresponding to the video segments included in the playlist.

In the video playback method provided in the present invention, a media device searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that a playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

### Embodiment 3:

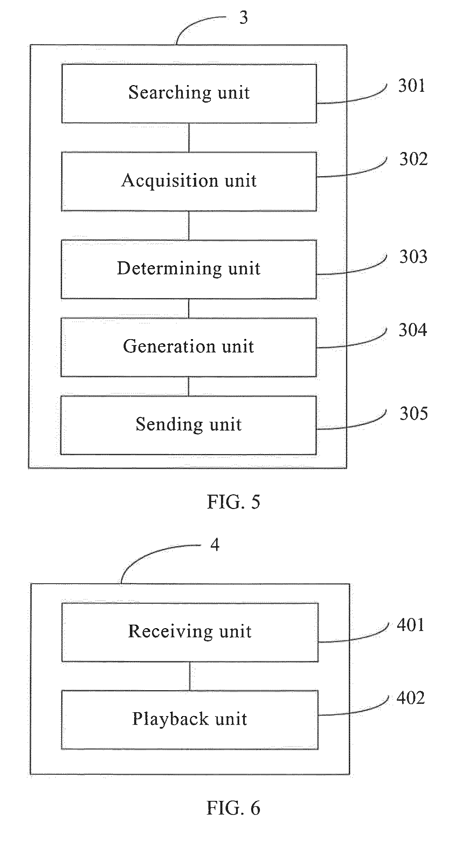

The embodiment of the present invention provides a media device 3 deployed in a multimedia system. The multimedia system includes: the media device 3, a playback device, and at least one media server. As shown in FIG. 5, the media device 3 includes: a searching unit 301, an acquisition unit 302, a determining unit 303, a generation unit 304, and a sending unit 305.

The media server in the multimedia system provided in the embodiment of the present invention is a video server or a CDN server, and therefore a media gateway may perform searching to obtain a large quantity of video segments. In a specific implementation, decoding parameters for these video segments, for example, SPS/PPS information required for initialization of an H.264 decoder, are acquired. The video segments are video segments that are in different formats and from a same media server. Alternatively, the video segments are video segments that are in different formats and from different media servers. Certainly, the video segments are not limited thereto in the embodiment of the present invention. The video segments may also be video segments in a same format (all in a TS format) and from different media servers. Alternatively, the video segments may also be video segments in a same format (all in a TS format) and from a same media server. In short, the embodiment of the present invention aims to implement continuous playback of any video segments.

In addition, in existing standards, when a video resource is segmented to obtain video segments, duration of the video segments is not specified. In this way, video segments in a same media server may have same duration, or may also have different duration. Similarly, video segments in different media servers may also have same duration, or may also have different duration. A media server records a start moment and an end moment of each video segment, that is, which part of which video the video segment is. For example, a media server records a video segment being the 20th second to the 40th second of a movie A.

The searching unit 301 is configured to search at least one media server to obtain video segments of a to-be-played video.

The searching unit 301 determines video segments matching program information of the to-be-played video as the video segments of the to-be-played video. The program information of the video segment is identification information of the video segment, and may be a name of a video corresponding to the video segment, or may also be release time, director information, and the like of a video corresponding to the video segment. In short, one video may be uniquely determined according to the program information of the to-be-played video, so as to further determine multiple video segments corresponding to the video. For example, according to the name "Titanic", one video is uniquely determined, or one video may also be uniquely determined according to a director, cast, release time, and the like.

Herein, in the acquired video segments matching the program information of the to-be-played video, the video segments may have different duration and may be in different formats. Exemplarily, video segments having duration of 10s, 20s, 35s, and the like may exist in a matching video segment set matching the movie A.

The acquisition unit 302 is configured to acquire playback information, address information, and a decoding parameter of each video segment.

The determining unit 303 is configured to determine, according to the playback information of the video segments, usable video segments for continuous playback of the to-be-played video and an order of the usable video segments.

The generation unit 304 is configured to generate, according to the order, a playlist including the address information and the decoding parameter of each usable video segment.

The sending unit 305 is configured to send the playlist to a playback device, so that the playback device finds a usable video segment according to the order and according to the address information, and decodes the usable video segment by using a decoding parameter and plays the usable video segment.

The playback information includes the program information of the video segments, and the searching unit 301 is specifically configured to search the at least one media server to obtain video segments matching the program information of the to-be-played video, and determine the video segments matching the program information of the to-be-played video as the video segments of the to-be-played video, where the program information is identification information of the to-be-played video.

The playback information further includes a start moment and an end moment of the video segment, and
the determining unit 303 is specifically configured to select, from the video segments of the to-be-played video, any video segment whose start moment is the 1 st second as a first usable video segment for continuous playback of the to-be-played video; and select, from the video segments of the to-be-played video, any video segment including a next moment of the end moment of the first usable video segment as a second usable video segment for continuous playback of the to-be-played video.

The determining unit 303 is further configured to determine playback start positions and playback end positions of the first usable video segment and the second usable video segment.

The media device 3 further includes a judging unit, where the judging unit is configured to determine whether the end moment of the second usable video segment is an end moment of the to-be-played video.

The generation unit 304 is specifically configured to: after the judging unit determines that the end moment of the second usable video segment is the end moment of the to-be-played video, generate, according to an order of the first usable video segment and the second usable video segment, a playlist including the playback start positions, the playback end positions, the address information, and the decoding parameters of the first usable video segment and the second usable video segment.

The determining unit 303 is further configured to: after the judging unit determines that the end moment of the second usable video segment is not an end moment of the to-be-played video, search the video segments of the to-be-played video to determine a next usable video segment until the end moment of the next usable video segment is the end moment of the to-be-played video; and determine a playback start position and a playback end position of each next usable video segment.

The generation unit 304 is further configured to generate, according to the order of the usable video segments, a playlist including the playback start position, the playback end position, the address information, and the decoding parameter of each usable video segment.

The determining unit 303 is specifically configured to determine the playback start position of the first usable video segment as the start moment of the first usable video segment, and set the playback end position of the first usable video segment to a previous moment of the start moment of the second usable video segment; and determine the playback start position of the second usable video segment as the start moment of the second usable video segment, and set the playback end position of the second usable video segment to the end moment of the second usable video segment; or, determine the playback start position of the first usable video segment as the start moment of the first usable video segment, and set the playback end position of the first usable video segment to the end moment of the first usable video segment; and determine the playback start position of the second usable video segment as the next moment of the end moment of the first usable video segment, and set the playback end position of the second usable video segment to the end moment of the second usable video segment.

The media device 3 further includes a receiving unit, where the receiving unit is configured to receive a playlist request message sent by the playback device.

The playback information further includes: duration information of the video segments and sizes of the video segments, and
the playlist includes: the decoding parameter, the address information, the playback start position, the playback end position, the duration information, the start moment, and the end moment of each usable video segment of the to-be-played video and a size of each usable video segment of the to-be-played video.

When determining the playback start positions and the playback end positions of the usable video segments of the to-be-played video, the determining unit 303 may also edit a former usable video segment. That is, the playback start position of the first usable video segment is set to the start moment of the first usable video segment, and the playback end position of the first usable video segment is set to a previous second of the start moment of the second usable video segment. The playback start position of the second usable video segment is set to the start moment of the second usable video segment. In this case, the playback end position of the second usable video segment may be not the end moment of the second usable video segment, and needs to be set by the media gateway according to a next usable video segment.

In short, editing by the determining unit 303 is not limited. A latter usable video segment may be edited, or a former usable video segment may also be edited, or splicing and editing may also be performed according to a specific condition, which is not limited herein.

The media device provided in the present invention searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that a playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

The embodiment of the present invention provides a playback device 4 deployed in a multimedia system. The multimedia system includes: a media device, the playback device, and at least one media server. As shown in FIG. 6, the playback device 4 includes: a receiving unit 401 and a playback unit 402.

The receiving unit 401 is configured to receive a playlist sent by the media device.

The playback unit 402 is configured to find a usable video segment according to address information and according to an order, which is indicated by the playlist, of usable video segments of a to-be-played video, and decode the usable video segment by using a decoding parameter and play the usable video segment.

The playlist further includes:
a playback start position, a playback end position, address information, duration information, and program information of each usable video segment of the to-be-played video and a size of each usable video segment of the to-be-played video, where the program information is identification information of the to-be-played video.

For any usable video segment of the to-be-played video, if the playback start position of the usable video segment is a start moment of the usable video segment,
the playback unit 402 is specifically configured to start decoding the usable video segment from a position indicated by the start moment of the usable video segment; and
start playback from a start position indicated by the start moment of the usable video segment, and end playback at a position indicated by the playback end position of the usable video segment.

For any usable video segment of the to-be-played video, if the playback start position of the usable video segment is not a start moment of the usable video segment,
the playback unit 402 is specifically configured to start decoding the usable video segment from a position indicated by the start moment of the usable video segment; and
start playback from a start position indicated by the playback start position of the usable video segment, and end playback at a position indicated by the playback end position of the usable video segment.

The playback device further includes a sending unit, where
the receiving unit 401 is further configured to receive a playback request message input by a user; and
the sending unit is configured to send a playlist request message to the media device to request the playlist from the media device.

The playback device provided in the embodiment of the present invention can acquire a usable video segment according to address information of each usable video segment of a to-be-played video included in a playlist, and decode the usable video segment according to a decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

### Embodiment 4:

The embodiment of the present invention provides a multimedia system, configured to perform continuous playback of a video resource, and including: a media device, a playback device, and a media server.

The media device is the foregoing media device 3; the playback device is the foregoing playback device 4.

In the multimedia system provided in the present invention, a media device searches multiple media servers in advance to find video segments of a to-be-played video, and acquires decoding parameters, playback information, and address information of these video segments. According to start moments and end moments of the video segments included in the playback information, an order of usable video segments of the to-be-played video and playback start and end positions of each usable video segment are determined. A playlist including the playback start and end positions, the decoding parameter, and the address information of each usable video segment of the to-be-played video is generated, so that a playback device can acquire a usable video segment according to the address information of each usable video segment of the to-be-played video included in the playlist, and decode the usable video segment according to the decoding parameter of the usable video segment and play the usable video segment, so as to perform continuous playback of usable video segments of each to-be-played video. Compared with an existing HLS technology in which only continuous playback of video segments in a TS format can be implemented, in the present invention, video segments in different formats may be used to implement continuous playback of a to-be-played video.

### Embodiment 5:

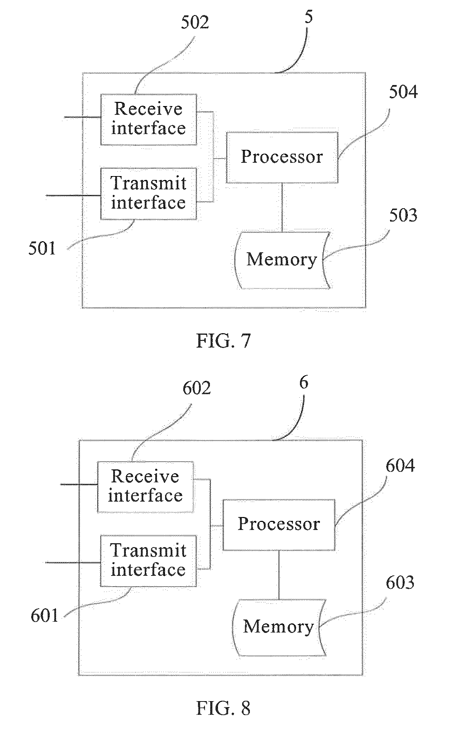

The embodiment of the present invention provides a media device 5 deployed in a multimedia system. The multimedia system includes: the media device 5, a playback device, and at least one media server. As shown in FIG. 7, the media device 5 includes: a transmit interface 501, a receive interface 502, a memory 503, and a processor 504 separately connected to the transmit interface 501, the receive interface 502, and the memory 503. Certainly, the media device 5 may further include general-purpose components such as a baseband processing component, an intermediate radio frequency processing component, and an input/output apparatus, and the embodiment of the present invention does not place any limitation herein. The memory 503 stores a group of program code, and the processor 504 is configured to invoke the program code stored in the memory 503 to perform the following operations:

The processor 504 is configured to search at least one media server to obtain video segments of a to-be-played video.

The processor 504 determines video segments matching program information of the to-be-played video as the video segments of the to-be-played video. The program information of the video segment is identification information of the video segment, and may be a name of a video corresponding to the video segment, or may also be release time, director information, and the like of a video corresponding to the video segment. In short, one video may be uniquely determined according to the program information of the to-be-played video, so as to further determine multiple video segments corresponding to the video. For example, according to the name "Titanic", one video is uniquely determined, or one video may also be uniquely determined according to a director, cast, release time, and the like.

Herein, in the acquired video segments matching the program information of the to-be-played video, the video segments may have different duration and may be in different formats. Exemplarily, video segments having duration of 10s, 20s, 35s, and the like may exist in a matching video segment set matching the movie A.

The processor 504 is configured to acquire playback information, address information, and a decoding parameter of each video segment.

The processor 504 is configured to determine, according to the playback information of the video segments, usable video segments for continuous playback of the to-be-played video and an order of the usable video segments.

The processor 504 is configured to generate, according to the order, a playlist including the address information and the decoding parameter of each usable video segment.

The processor 504 is configured to send the playlist to a playback device by using the transmit interface 501, so that the playback device finds a usable video segment according to the order and according to the address information, and decodes the usable video segment by using a decoding parameter and plays the usable video segment.

The playback information includes the program information of the video segments, and the searching unit 301 is specifically configured to search the at least one media server to obtain video segments matching the program information of the to-be-played video, and determine the video segments matching the program information of the to-be-played video as the video segments of the to-be-played video, where the program information is identification information of the to-be-played video.

The playback information further includes a start moment and an end moment of the video segment, and
the processor 504 is specifically configured to select, from the video segments of the to-be-played video, any video segment whose start moment is the 1st second as a first usable video segment for continuous playback of the to-be-played video; and select, from the video segments of the to-be-played video, any video segment including a next moment of the end moment of the first usable video segment as a second usable video segment for continuous playback of the to-be-played video.

The processor 504 is further configured to determine playback start positions and playback end positions of the first usable video segment and the second usable video segment.

The processor 504 is further configured to determine whether the end moment of the second usable video segment is an end moment of the to-be-played video.

The processor 504 is specifically configured to: after it is determined that the end moment of the second usable video segment is the end moment of the to-be-played video, generate, according to an order of the first usable video segment and the second usable video segment, a playlist including the playback start positions, the playback end positions, the address information, and the decoding parameters of the first usable video segment and the second usable video segment.

The processor 504 is further configured to: after it is determined that the end moment of the second usable video segment is not an end moment of the to-be-played video, search the video segments of the to-be-played video to determine a next usable video segment until the end moment of the next usable video segment is the end moment of the to-be-played video; and determine a playback start position and a playback end position of each next usable video segment.

The processor 504 is further configured to generate, according to the order of the usable video segments, a playlist including the playback start position, the playback end position, the address information, and the decoding parameter of each usable video segment.

The processor 504 is specifically configured to determine the playback start position of the first usable video segment as the start moment of the first usable video segment, and set the playback end position of the first usable video segment to a previous moment of the start moment of the second usable video segment; and determine the playback start position of the second usable video segment as the start moment of the second usable video segment, and set the playback end position of the second usable video segment to the end moment of the second usable video segment; or, determine the playback start position of the first usable video segment as the start moment of the first usable video segment, and set the playback end position of the first usable video segment to the end moment of the first usable video segment; and determine the playback start position of the second usable video segment as the next moment of the end moment of the first usable video segment, and set the playback end position of the second usable video segment to the end moment of the second usable video segment.

The processor 504 is further configured to receive, by using the receiving interface 502, a playlist request message sent by the playback device.

The playback information further includes: duration information of the video segment and a size of the video segment, and
the playlist includes: the decoding parameter, the address information, the playback start position, the playback end position, the duration information, the start moment, and the end moment of each usable video segment of the to-be-played video and a size of each usable video segment of the to-be-played video.

When determining the playback start position and the playback end position of each usable video segment of the to-be-played video, the processor 504 may also edit a former usable video segment. That is, the playback start position of the first usable video segment is set to the start moment of the first usable video segment, and the playback end position of the first usable video segment is set to a previous second of the start moment of the second usable video segment. The playback start position of the second usable video segment is set to the start moment of the second usable video segment. In this case, the playback end position of the second usable video segment may be not the end moment of the second usable video segment, and needs to be set by a media gateway according to a next usable video segment.

In short, editing by the processor 504 is not limited. A latter usable video segment may be edited, or a former usable video segment may also be edited, or splicing and editing may also be performed according to a specific condition, which is not limited herein.

The embodiment of the present invention provides a playback device 6 deployed in a multimedia system. The multimedia system includes: a media device, theplayback device 6, and at least one media server. As shown in FIG. 8, the playback device 6 includes: a transmit interface 601, a receive interface 602, a memory 603, and a processor 604 separately connected to the transmit interface 601, the receive interface 602, and the memory 603. Certainly, the media device 5 may further include general-purpose components such as a baseband processing component, an intermediate radio frequency processing component, and an input/output apparatus, and the embodiment of the present invention does not place any limitation herein. The memory 603 stores a group of program code, and the processor 604 is configured to invoke the program code stored in the memory 603 to perform the following operations:

The processor 604 is configured to receive a playlist sent by the media device.

The processor 604 is configured to find a usable video segment according to address information and according to an order, which is indicated by the playlist, of usable video segments of a to-be-played video, and decode the usable video segment by using a decoding parameter and play the usable video segment.

The playlist further includes: a playback start position, a playback end position, address information, duration information, and program information of each usable video segment of the to-be-played video and a size of each usable video segment of the to-be-played video, where the program information is identification information of the to-be-played video.

For any usable video segment of the to-be-played video:
1) If the playback start position of the usable video segment is a start moment of the usable video segment,
   the processor 604 is specifically configured to start decoding the usable video segment from a position indicated by the start moment of the usable video segment; and
   start playback from a start position indicated by the start moment of the usable video segment, and end playback at a position indicated by the playback end position of the usable video segment.
2) If the playback start position of the usable video segment is not a start moment of the usable video segment,
   the processor 604 is specifically configured to start decoding the usable video segment from the position indicated by the start moment of the usable video segment; and
   start playback from a start position indicated by the playback start position of the usable video segment, and end playback at a position indicated by the playback end position of the usable video segment.

The processor 604 is further configured to receive, by using the receive interface 602, a playback request message input by a user.

The processor 604 is further configured to send, by using the transmit interface 601, a playlist request message to the media device to request the playlist from the media device.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video playback method, comprising:
searching at least one media server to obtain video segments of a to-be-played video;
acquiring playback information, address information, and a decoding parameter of each video segment;
determining, according to the playback information of the video segments, usable video segments for continuous playback of the to-be-played video and an order of the usable video segments, and generating, according to the order, a playlist comprising the address information and the decoding parameter of each usable video segment; and
sending the playlist to a playback device, so that the playback device finds a usable video segment according to the order and according to the address information, and decodes the usable video segment by using a decoding parameter and plays the usable video segment.

2. The method according to claim 1, wherein the playback information comprises program information of the video segment, and
the searching at least one media server to obtain video segments of a to-be-played video specifically comprises:
searching the at least one media server to obtain video segments matching program information of the to-be-played video, and determining the video segments matching the program information of the to-be-played video as the video segments of the to-be-played video, wherein the program information is identification information of the to-be-played video.

3. The method according to claim 1, wherein the playback information further comprises a start moment and an end moment of the video segment, and
the determining, according to the playback information of the video segments, usable video segments for continuous playback of the to-be-played video and an order of the usable video segments, and generating, according to the order, a playlist comprising the address information and the decoding parameter of each usable video segment specifically comprises:
selecting, from the video segments of the to-be-played video, any video segment whose start moment is the 1 st second as a first usable video segment for continuous playback of the to-be-played video;
selecting, from the video segments of the to-be-played video, any video segment comprising a next moment of the end moment of the first usable video segment as a second usable video segment for continuous playback of the to-be-played video;
determining playback start positions and playback end positions of the first usable video segment and the second usable video segment; and
if the end moment of the second usable video segment is an end moment of the to-be-played video, generating, according to an order of the first usable video segment and the second usable video segment, a playlist comprising the playback start positions, the playback end positions, the address information, and the decoding parameters of the first usable video segment and the second usable video segment; or
if it is determined that the end moment of the second usable video segment is not an end moment of the to-be-played video, searching the video segments of the to-be-played video to determine a next usable video segment until the end moment of the next usable video segment is the end moment of the to-be-played video; and determining a playback start position and a playback end position of each next usable video segment, and generating, according to the order of the usable video segments, a playlist comprising the playback start position, the playback end position, the address information, and the decoding parameter of each usable video segment.

4. The method according to claim 3, wherein the determining playback start positions and playback end positions of the first usable video segment and the second usable video segment specifically comprises:
determining the playback start position of the first usable video segment as the start moment of the first usable video segment, and setting the playback end position of the first usable video segment to a previous moment of the start moment of the second usable video segment; and determining the playback start position of the second usable video segment as the start moment of the second usable video segment, and setting the playback end position of the second usable video segment to the end moment of the second usable video segment; or
determining the playback start position of the first usable video segment as the start moment of the first usable video segment, and setting the playback end position of the first usable video segment to the end moment of the first usable video segment; and determining the playback start position of the second usable video segment as the next moment of the end moment of the first usable video segment, and setting the playback end position of the second usable video segment to the end moment of the second usable video segment.

5. The method according to any one of claims 1 to 4, wherein the playback information further comprises: duration information of the video segment and a size of the video segment, and
the playlist comprises: the decoding parameter, the address information, the playback start position, the playback end position, the duration information, the start moment, and the end moment of each usable video segment of the to-be-played video and a size of each usable video segment of the to-be-played video.

6. A video playback method, wherein the method comprises:
receiving a playlist sent by a media device, finding a usable video segment according to address information and according to an order, which is indicated by the playlist, of usable video segments of a to-be-played video, and decoding the usable video segment by using a decoding parameter and playing the usable video segment.

7. The method according to claim 6, wherein the playlist further comprises:
a playback start position, a playback end position, address information, duration information, and program information of each usable video segment of the to-be-played video and a size of each usable video segment of the to-be-played video, wherein the program information is identification information of the to-be-played video.

8. The method according to claim 6 or 7, wherein for any usable video segment of the to-be-played video, if the playback start position of the usable video segment is a start moment of the usable video segment,
the decoding the usable video segment by using a decoding parameter and playing the usable video segment specifically comprises:
starting decoding the usable video segment from a position indicated by the start moment of the usable video segment; and
starting playback from a start position indicated by the start moment of the usable video segment, and ending playback at a position indicated by the playback end position of the usable video segment.

9. The method according to claim 6 or 7, wherein for any usable video segment of the to-be-played video, if the playback start position of the usable video segment is not a start moment of the usable video segment,
the decoding the usable video segment by using a decoding parameter and playing the usable video segment specifically comprises:
starting decoding the usable video segment from a position indicated by the start moment of the usable video segment; and
starting playback from a start position indicated by the playback start position of the usable video segment, and ending playback at a position indicated by the playback end position of the usable video segment.

10. A media device, wherein the media device comprises:
a searching unit, configured to search at least one media server to obtain video segments of a to-be-played video;
an acquisition unit, configured to acquire playback information, address information, and a decoding parameter of each video segment;
a determining unit, configured to determine, according to the playback information of the video segments, usable video segments for continuous playback of the to-be-played video and an order of the usable video segments;
a generation unit, configured to generate, according to the order, a playlist comprising the address information and the decoding parameter of each usable video segment; and
a sending unit, configured to send the playlist to a playback device, so that the playback device finds a usable video segment according to the order and according to the address information, and decodes the usable video segment by using a decoding parameter and plays the usable video segment.

11. The media device according to claim 10, wherein the playback information comprises program information of the video segment, and
the searching unit is specifically configured to search the at least one media server to obtain video segments matching program information of the to-be-played video, and determine the video segments matching the program information of the to-be-played video as the video segments of the to-be-played video, wherein the program information is identification information of the to-be-played video.

12. The media device according to claim 10, wherein the playback information further comprises a start moment and an end moment of the video segment,
the determining unit is specifically configured to select, from the video segments of the to-be-played video, any video segment whose start moment is the 1 st second as a first usable video segment for continuous playback of the to-be-played video; and select, from the video segments of the to-be-played video, any video segment comprising a next moment of the end moment of the first usable video segment as a second usable video segment for continuous playback of the to-be-played video;
the determining unit is further configured to determine playback start positions and playback end positions of the first usable video segment and the second usable video segment; and
the media device further comprises a judging unit, wherein
the judging unit is configured to determine whether the end moment of the second usable video segment is an end moment of the to-be-played video; and
the generation unit is specifically configured to: after the judging unit determines that the end moment of the second usable video segment is the end moment of the to-be-played video, generate, according to an order of the first usable video segment and the second usable video segment, a playlist comprising the playback start positions, the playback end positions, the address information, and the decoding parameters of the first usable video segment and the second usable video segment; or
the determining unit is further configured to: after the judging unit determines that the end moment of the second usable video segment is not an end moment of the to-be-played video, search the video segments of the to-be-played video to determine a next usable video segment until the end moment of the next usable video segment is the end moment of the to-be-played video; and determine a playback start position and a playback end position of each next usable video segment; and
the generation unit is further configured to generate, according to the order of the usable video segments, a playlist comprising the playback start position, the playback end position, the address information, and the decoding parameter of each usable video segment.

13. The media device according to claim 12, wherein the determining unit is specifically configured to determine the playback start position of the first usable video segment as the start moment of the first usable video segment, and set the playback end position of the first usable video segment to a previous moment of the start moment of the second usable video segment; and determine the playback start position of the second usable video segment as the start moment of the second usable video segment, and set the playback end position of the second usable video segment to the end moment of the second usable video segment; or
determine the playback start position of the first usable video segment as the start moment of the first usable video segment, and set the playback end position of the first usable video segment to the end moment of the first usable video segment; and determine the playback start position of the second usable video segment as the next moment of the end moment of the first usable video segment, and set the playback end position of the second usable video segment to the end moment of the second usable video segment.

14. A playback device, comprising:
a receiving unit, configured to receive a playlist sent by a media device;
a playback unit, configured to find a usable video segment according to address information and according to an order, which is indicated by the playlist, of usable video segments of a to-be-played video, and decode the usable video segment by using a decoding parameter and play the usable video segment.

15. The playback device according to claim 14, wherein for any usable video segment of the to-be-played video, if the playback start position of the usable video segment is a start moment of the usable video segment,
the playback unit is specifically configured to start decoding the usable video segment from a position indicated by the start moment of the usable video segment; and
start playback from a start position indicated by the start moment of the usable video segment, and end playback at a position indicated by the playback end position of the usable video segment.

16. The playback device according to claim 14, wherein for any usable video segment of the to-be-played video, if the playback start position of the usable video segment is not a start moment of the usable video segment,
the playback unit is specifically configured to start decoding the usable video segment from a position indicated by the start moment of the usable video segment; and
start playback from a start position indicated by the playback start position of the usable video segment, and end playback at a position indicated by the playback end position of the usable video segment.
